# EUROPEAN PATENT APPLICATION

(11) **EP 4 804 709 A1**
(43) Date of publication of application: **09.09.2026**
(21) Application number: 24885573.6
(22) Date of filing: 24.10.2024
(51) Int. Cl.: H04W 74/0833, H04W 48/10, H04W 72/232

(54) **COMMUNICATION DEVICE, BASE STATION, AND COMMUNICATION METHOD**

(30) Priority: 31.10.2023 JP 2023187080
(71) Applicant: DENSO CORPORATION, Kariya-city, Aichi 448-8661 (JP)
(72) Inventor: FURUYAMA, Takahiro, Kariya- city, Aichi 4488661 (JP)
(74) Representative: TBK
(86) International application number: PCT/JP2024/037870
(87) International publication number: WO 2025/094800

(57) **Abstract**

A communication apparatus (100) according to an embodiment comprises: a receiver (112) configured to receive a retransmission parameter from a base station (200), the retransmission parameter being a random access parameter used, in a random access (RA) procedure, for retransmission control on an RA preamble in a physical random access channel (PRACH) occasion; and a controller (120) configured to control retransmission of the RA preamble on a basis of the retransmission parameter. The retransmission parameter includes a specific retransmission parameter exclusively used in a case where a period of the PRACH occasion is to be changed by signaling of a lower layer lower than a radio resource control (RRC) layer.

## Description

### Cross-Reference to Related Application

This application is based on and claims the benefit of priority from Japanese Patent Application No. 2023-187080, filed on October 31, 2023, the entire contents of which are incorporated herein by reference.

### Technical Field

The present disclosure relates to a communication apparatus, a base station, and a communication method.

### Background Art

The Third Generation Partnership Project (3GPP (registered trademark, the same shall apply hereinafter)), which is a mobile communication system standardization project, is discussing network energy saving (NES). As one of NES technologies, dynamic adaptation for dynamically changing the period of physical random access channel (PRACH) occasion (hereinafter, PRACH period) has been proposed (see, e.g., Non Patent Literature 1).

In dynamic adaptation of a PRACH occasion, changing of the PRACH period using, for example, downlink control information (DCI) enables the PRACH period to be changed at shorter time intervals than in a case where the PRACH period is changed, for example, by updating a system information block. As a result, network energy can be saved.

### Citation List

### Non Patent Literature

Non Patent Literature 1: "RWS-230156" (On NW Energy Savings for Rel-19)

### Summary of Invention

A communication apparatus according to a first aspect comprises: a receiver configured to receive a retransmission parameter from a base station, the retransmission parameter being a random access parameter used, in a random access (RA) procedure, for retransmission control on an RA preamble in a physical random access channel (PRACH) occasion; and a controller configured to control retransmission of the RA preamble on a basis of the retransmission parameter. The retransmission parameter includes a specific retransmission parameter exclusively used in a case where a period of the PRACH occasion is to be changed by signaling of a lower layer lower than a radio resource control (RRC) layer.

A base station according to a second aspect comprises: a transmitter configured to transmit a retransmission parameter to a communication apparatus, the retransmission parameter being a random access parameter used, in a random access (RA) procedure, for retransmission control on an RA preamble in a physical random access channel (PRACH) occasion. The retransmission parameter includes a specific retransmission parameter exclusively used in a case where a period of the PRACH occasion is to be changed by signaling of a lower layer lower than a radio resource control (RRC) layer.

A communication method according to a third aspect is executed by a communication apparatus. The communication method comprises the steps of: receiving a retransmission parameter from a base station, the retransmission parameter being a random access parameter used, in a random access (RA) procedure, for retransmission control on an RA preamble in a physical random access channel (PRACH) occasion; and controlling retransmission of the RA preamble on a basis of the retransmission parameter. The retransmission parameter includes a specific retransmission parameter exclusively used in a case where a period of the PRACH occasion is to be changed by signaling of a lower layer lower than a radio resource control (RRC) layer.

### Brief Description of Drawings

Objects, features, advantages, and the like of the present disclosure will become more apparent from the following detailed description with reference to the accompanying drawings.
Fig. 1 is a diagram illustrating a configuration of a mobile communication system according to an embodiment.
Fig. 2 is a diagram illustrating a configuration example of a protocol stack according to the embodiment.
Fig. 3 is a diagram illustrating a configuration of a UE according to the embodiment.
Fig. 4 is a diagram illustrating a configuration of a base station according to the embodiment.
Fig. 5 is a sequence diagram illustrating an example operation according to a first embodiment.
Fig. 6 is a diagram for describing the first embodiment.
Fig. 7 is a flowchart (part 1) for describing an example operation according to a second embodiment.
Fig. 8 is a flowchart (part 2) for describing an example operation according to the second embodiment.

### Description of Embodiments

A mobile communication system according to an embodiment will be described with reference to the drawings. In the description of the drawings, the same or similar parts are denoted by the same or similar reference numerals.

One object of the present disclosure is to provide a communication apparatus, a base station, and a communication method that enable a random access procedure to be appropriately performed in a case where dynamic adaptation of a PRACH occasion is performed.

### (System Configuration)

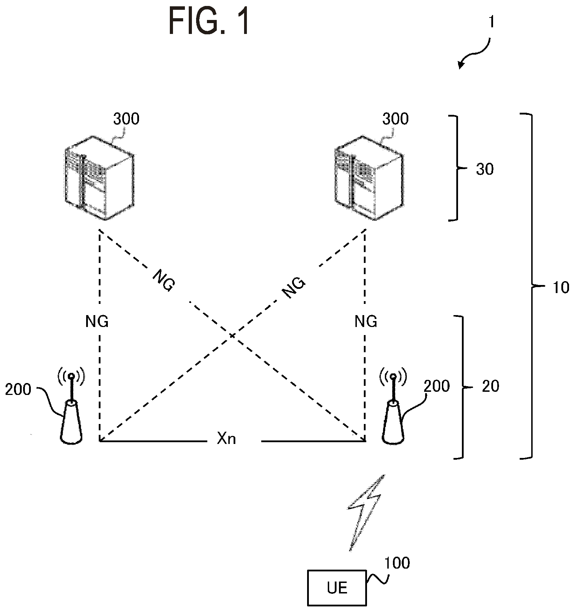

First, a configuration of a mobile communication system 1 according to the present embodiment is described with reference to Fig. 1. The mobile communication system 1 is, for example, a system conforming to a technical specification (TS) of 3GPP. Hereinafter, description is made with an example in which the 5th generation system (5G system) of the 3GPP standard, that is, a mobile communication system based on a new radio (NR) access is used as the mobile communication system 1.

The mobile communication system 1 includes a network 10 and a user equipment (User Equipment: UE) 100 that communicates with the network 10. The network 10 includes NG-RAN (Next Generation Radio Access Network) 20, which is a 5G radio access network, and a 5GC (5G Core Network) 30, which is a 5G core network.

The UE 100 is a communication apparatus that performs communication via a base station 200. The UE 100 may be an apparatus used by a user. The UE 100 is, for example, a mobile apparatus such as a mobile phone terminal such as a smartphone, a tablet terminal, a notebook PC, a communication module, or a communication card. The UE 100 may be a vehicle (for example, a car, a train, or the like) or an apparatus (for example, a vehicle UE) provided in the vehicle. The UE 100 may be a transport body other than the vehicle (for example, a ship, an airplane, or the like) or an apparatus (for example, an aerial UE) provided in the transport body. The UE 100 may be a sensor or an apparatus provided in the sensor. Note that the UE 100 may be referred to as another term such as a terminal, a terminal apparatus, a mobile station, a mobile terminal, a mobile apparatus, a mobile unit, a subscriber station, a subscriber terminal, a subscriber apparatus, a subscriber unit, a wireless station, a wireless terminal, a wireless apparatus, a wireless unit, a remote station, a remote terminal, a remote apparatus, or a remote unit. In addition, the UE 100 is an example of a terminal, and the terminal may include a factory apparatus or the like.

The NG-RAN 20 includes a plurality of base stations 200. Each base station 200 manages at least one cell. One or a plurality of base stations 200 correspond to one or a plurality of cells. The base station 200 may be replaced with the cell, and the cell may be replaced with the base station 200. The cell configures a minimum unit of a communication area. One cell belongs to one frequency (carrier frequency). The term "cell" may indicate a radio communication resource and may also indicate a communication object of the UE 100. Each base station 200 can perform radio communication with the UE 100 existing in its own cell. The base station 200 communicates with the UE 100 using a protocol stack of RAN. Details of the protocol stack are described below. Also, the base station 200 is connected to another base station 200 (may be referred to as a neighboring base station) via an Xn interface. The base station 200 communicates with the neighboring base station via the Xn interface. Also, the base station 200 provides NR user plane and control plane protocol terminations toward the UE 100 and is connected to the 5GC 30 via an NG interface. Such a base station 200 of NR may be referred to as a gNodeB (gNB).

The 5GC 30 includes a core network apparatus 300. The core network apparatus 300 includes, for example, an access and mobility management function (AMF) and/or a user plane function (UPF). The AMF performs mobility management of the UE 100. The UPF provides a feature specialized for U-plane processing. The AMF and the UPF are connected to the base station 200 via the NG interface.

### (Configuration Example of Protocol Stack)

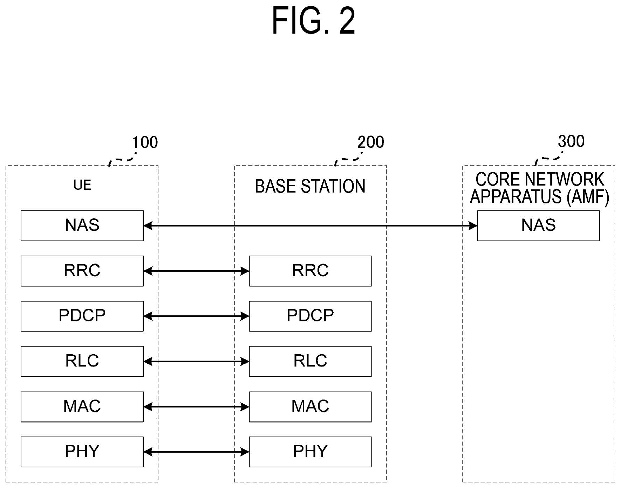

Next, a configuration example of the protocol stack according to the present embodiment will be described with reference to Fig. 2.

A protocol of a radio section between the UE 100 and the base station 200 includes a physical (PHY) layer, a medium access control (MAC) layer, a radio link control (RLC) layer, a packet data convergence protocol (PDCP) layer, and a radio resource control (RRC) layer.

The PHY layer performs encoding and decoding, modulation and demodulation, antenna mapping and demapping, and resource mapping and demapping. Data and control information are transmitted between the PHY layer of the UE 100 and the PHY layer of the base station 200 via a physical channel.

The MAC layer performs data priority control, retransmission processing by hybrid ARQ (HARQ), a random access procedure, and the like. Data and control information are transmitted between the MAC layer of the UE 100 and the MAC layer of the base station 200 via a transport channel. The MAC layer of the base station 200 includes a scheduler. The scheduler determines uplink and downlink transport formats (transport block size and modulation and coding scheme (MCS)) and resources to be allocated to the UE 100.

The RLC layer transmits data to the RLC layer on a reception side by using the features of the MAC layer and the PHY layer. Data and control information are transmitted between the RLC layer of the UE 100 and the RLC layer of the base station 200 via a logical channel.

The PDCP layer performs header compression/decompression and encryption/decryption.

A service data adaptation protocol (SDAP) layer may be provided as an upper layer of the PDCP layer. The service data adaptation protocol (SDAP) layer performs mapping between an IP flow which is a unit in which a core network performs quality of service (QoS) control, and a radio bearer which is a unit in which an access stratum (AS) performs QoS control.

The RRC layer controls a logical channel, a transport channel, and a physical channel according to establishment, reestablishment, and release of the radio bearer. RRC signaling for various configurations is transmitted between the RRC layer of the UE 100 and the RRC layer of the base station 200. In a case where an RRC connection exists between the RRC of the UE 100 and the RRC of the base station 200, the UE 100 is in an RRC connected state. In a case where no RRC connection exists between the RRC of the UE 100 and the RRC of the base station 200, the UE 100 is in an RRC idle state. In a case where the RRC connection between the RRC of the UE 100 and the RRC of the base station 200 is suspended, the UE 100 is in an RRC inactive state.

A NAS layer located above the RRC layer in the UE 100 performs session management and mobility management of the UE 100. NAS signaling is transmitted between the NAS layer of the UE 100 and the NAS layer of the core network apparatus 300.

Note that the UE 100 includes an application layer or the like in addition to a protocol of a radio interface.

### (Radio Frame Configuration)

In the 5G system, downlink transmission and uplink transmission are configured in a radio frame of 10 ms duration. For example, the radio frame is expressed by a system frame number (SFN) of 0 to 1023. For example, the radio frame is configured with 10 subframes. For example, one subframe may be 1 ms. Also, one subframe may be configured with one or more slots. For example, the number of symbols configuring one slot is 14 for a normal cyclic prefix (CP) and 12 for an extended CP. Also, the number of slots configuring one subframe changes depending on a configured subcarrier spacing. For example, for the normal CP, in a case where the subcarrier spacing is configured as 15 kHz, the number of slots per subframe is one (that is, 14 symbols), in a case where the subcarrier spacing is configured as 30 kHz, the number of slots per subframe is two (that is, 28 symbols), in a case where the subcarrier spacing is configured as 60 kHz, the number of slots per subframe is four (that is, 56 symbols), and in a case where the subcarrier spacing is configured as 120 kHz, the number of slots per subframe is eight (that is, 112 symbols). In addition, for the extended CP, in a case where 60 kHz is configured as the subcarrier spacing, the number of slots per subframe is 4 (that is, 48 symbols). That is, the number of slots configuring one subframe is determined based on the subcarrier spacing configured by the base station 200. Also, the number of symbols configuring one subframe is determined based on the subcarrier spacing configured by the base station 200. That is, the number of symbols included in a subframe of 1 ms is determined based on the subcarrier spacing configured by the base station 200, and a length (a length in a time direction) of each symbol changes.

### (Determination of PRACH Transmission Occasion)

An example of determining a PRACH transmission occasion will be described. The UE 100 determines a PRACH occasion (or referred to as PRACH transmission occasion) in a case where, for example, a random access (RA) procedure is performed.

The UE 100 may perform the RA procedure in a case where the RA procedure is triggered by any of events, for example, (a) an initial access from the RRC idle state, (b) an RRC connection re-establishment procedure, (c) arrival of downlink data or uplink data in the RRC connected state when an uplink synchronization status is "asynchronous", (d) arrival of uplink data in a case where there is no usable physical uplink control channel (PUCCH) resource for a scheduling request (SR), (e) SR failure, (f) a request by RRC in a synchronization reconfiguration (for example, handover), (g) an RRC connection resume procedure from the RRC inactive state, (h) for establishing time adjustment of a secondary timing advance group (TAG), (i) a request for other system information (Other SI), (j) a beam failure recovery, (k) a consistent uplink listen-before-talk (UL LBT) failure in a Spcell, (l) small data transmission (SDT) in the RRC inactive state, and (m) for positioning in the RRC connected state that requires the RA procedure (for example, in a case where timing advance is required for UE positioning).

In the RA procedure, the UE 100 determines a resource for PRACH transmission (i.e., a PRACH occasion) by using, for example, a plurality of random access configurations defined in advance and a random access (RA) parameter included in a system information block type 1 (SIB1) message.

Random access (RA) configurations are defined in a table (RA configuration table) that provides association of a PRACH preamble format and an allocation configuration in time domain of a PRACH occasion with a PRACH configuration index. The UE 100 stores the table in advance. The PRACH preamble format is "Preamble format". The allocation configuration in time domain of a PRACH occasion is, for example, "Preamble format", "x" and "y" defined by "n_{f} mod x = y", "Subframe number", "Starting symbol", "Number of PRACH slots within a subframe", "number of time-domain PRACH occasions within a PRACH slot", or "PRACH duration".

The RA parameter is designated, for example, by RACH configuration common information (for example, RACH-ConfigCommon or RACH-ConfigCommonTwoStepRA) used for designating the random access parameter. "RACH-ConfigCommon" may be information used for identifying cell specific random-access parameters. "RACH-ConfigCommonTwoStepRA" may be information used for identifying cell specific two-step random access type parameters.

The RACH configuration common information may include, for example, a PRACH configuration index (for example, prach-ConfigurationIndex or msgA-PRACH-ConfigurationIndex(-r16)) or information related to the number of PRACH transmission occasions (for example, msg1-FDM or msgA-RO-FDM(-r16)). "msg1-FDM" may indicate the number of PRACH transmission occasions frequency-division multiplexed (FDM) in a single instance. "msgA-RO-FDM" may indicate the number of msgA PRACH transmission occasions frequency-division multiplexed in a single instance. The PRACH configuration index indicates a PRACH occasion of a RA configuration to be used among a plurality of RA configurations defined in the RA configuration table in PRACH transmission. The UE 100 determines the PRACH occasion using the RA configuration indicated by the PRACH configuration index.

In addition, the UE 100 maps a synchronization signal (SS) and a physical broadcast channel (PBCH) block (SSB) index (hereinafter, also referred to as an SSB index) to the PRACH occasion.

Using a parameter (for example, the number of SSBs associated with one PRACH occasion or the number of contention-based preambles per SSB in each valid PRACH occasion) provided by the RACH configuration common information (for example, ssb-perRACH-OccasionAndCB-PreamblesPerSSB in RACH-ConfigCommon and/or msgA-SSB-PerRACH-OccasionAndCB-PreamblesPerSSB in RACH-ConfigCommonTwoStepRA), the SSB index is mapped to the valid PRACH occasion, for example, in the following order.
First, in increasing order of preamble indexes within a single PRACH occasion
Second, in increasing order of frequency resource indexes for frequency multiplexed PRACH occasions
Third, in increasing order of time resource indexes for time multiplexed PRACH occasions within a PRACH slot
Fourth, in increasing order of indexes for PRACH slots

In a case where the UE 100 performs the mapping, an association period is defined. The association period is a minimum value in a set determined by a PRACH configuration period. The association period initiates from frame 0. In the association period, a predetermined number of SSB indices are mapped at least once to the PRACH occasion. The UE 100 acquires the predetermined number from information (for example, ssb-PositionsInBurst) in the SIB1 or in serving cell configuration common information (for example, ServingCellConfigCommon). In a set determined by the PRACH configuration period, the PRACH configuration period (ms) and the association period (the number of PRACH configuration periods) are associated in the table.

In a case where a set of PRACH occasions or PRACH preambles that are not mapped to the predetermined number of SSB indices is present after an integer of SSB indices to mapping cycles of the PRACH occasions within the association period, the SSB indices are not mapped to the set of the PRACH occasions or the PRACH preambles.

An association pattern period includes one or more association periods. The association pattern period is determined such that a pattern between the PRACH occasion and the SSB index is repeated per 160 msec. The PRACH occasions that are not associated with the SSB indices after an integer of association periods are not used for PRACH transmission.

### (Configuration of User Equipment)

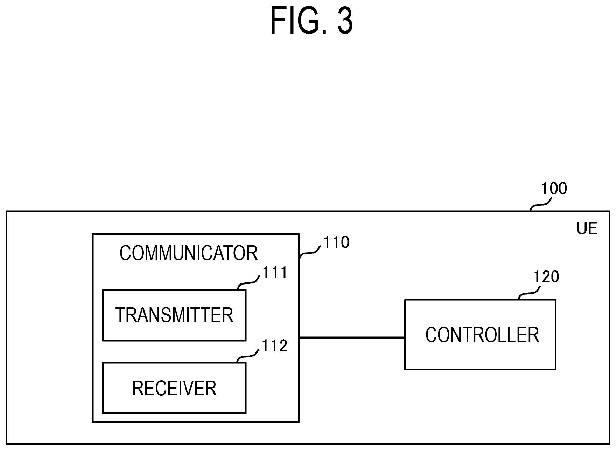

A configuration of the UE 100 according to the embodiment is described with reference to Fig. 3. The UE 100 includes a communicator 110 and a controller 120.

The communicator 110 performs radio communication with the base station 200 by transmitting and receiving a radio signal to and from the base station 200. The communicator 110 includes at least one transmitter 111 and at least one receiver 112. The transmitter 111 and the receiver 112 may be configured with a plurality of antennas and a radio frequency (RF) circuit. The antenna converts a signal into a radio wave and emits the radio wave into a space. Furthermore, the antenna receives a radio wave in a space and converts the radio wave into a signal. The RF circuit performs analog processing of a signal transmitted and received via the antenna. The RF circuit may include a high frequency filter, an amplifier, a modulator, a low pass filter, and the like.

The controller 120 performs various types of control in the UE 100. The controller 120 controls communication with the base station 200 via the communicator 110. The operation of the UE 100 described above and described below may be an operation controlled by the controller 120. The controller 120 may include at least one processor capable of executing a program and a memory that stores the program. The processor may execute the program and perform the operation of the controller 120. The controller 120 may include a digital signal processor that performs digital processing of a signal transmitted and received via the antenna and the RF circuit. The digital processing includes processing of the protocol stack of the RAN. Note that the memory stores the program to be executed by the processor, parameters related to the program, and data related to the program. The memory may include at least one of a read only memory (ROM), an erasable programmable read only memory (EPROM), an electrically erasable programmable read only memory (EEPROM), a random access memory (RAM), and a flash memory. The whole or part of the memory may be added to the processor.

In the UE 100 configured as described above, the receiver 112 receives a retransmission parameter from the base station 200, where the retransmission parameter is a random access parameter used, in the RA procedure, for retransmission control on the RA preamble in a PRACH occasion. The controller 120 controls retransmission of the RA preamble on the basis of the retransmission parameter. The retransmission parameter includes a specific retransmission parameter used exclusively in a case where the period of the PRACH occasion is to be changed by signaling of a lower layer lower than the RRC layer. This enables the UE 100 to use a specific retransmission parameter in a case where retransmission of the RA preamble is controlled. Due to the capability of configuring a specific retransmission parameter separately from a value of a usual retransmission parameter, control can be flexibly performed on the random access procedure in a case where dynamic adaptation of a PRACH occasion is performed. This enables the random access procedure to be appropriately performed in a case where dynamic adaptation of a PRACH occasion is performed.

### (Configuration of Base Station)

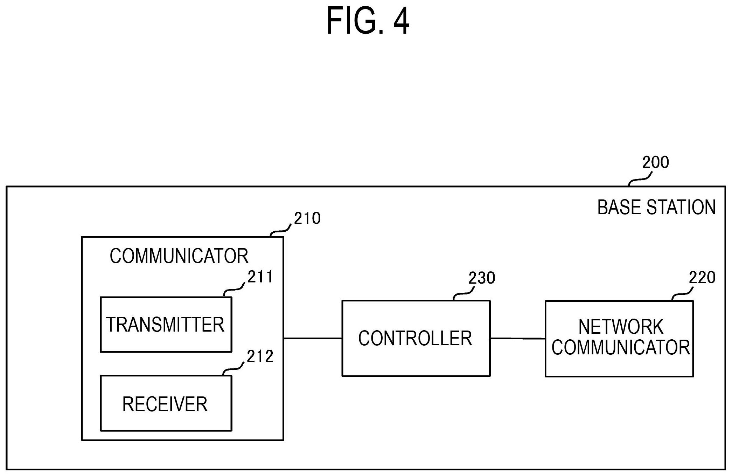

A configuration of the base station 200 according to the embodiment is described with reference to Fig. 4. The base station 200 includes a communicator 210, a network communicator 220, and a controller 230.

For example, the communicator 210 receives a radio signal from the UE 100 and transmits a radio signal to the UE 100. The communicator 210 includes at least one transmitter 211 and at least one receiver 212. The transmitter 211 and the receiver 212 may include an RF circuit. The RF circuit performs analog processing of a signal transmitted and received via the antenna. The RF circuit may include a high frequency filter, an amplifier, a modulator, a low pass filter, and the like.

The network communicator 220 transmits and receives a signal to and from the network. The network communicator 220 receives, for example, a signal from a neighboring base station connected via the Xn interface that is an interface between base stations and transmits a signal to the neighboring base station. Further, the network communicator 220 receives a signal from the core network apparatus 300 connected via the NG interface, for example, and transmits a signal to the core network apparatus 300.

The controller 230 performs various types of control in the base station 200. The controller 230 controls, for example, communication with the UE 100 via the communicator 210. Also, the controller 230 controls, for example, communication with a node (for example, the neighboring base station or the core network apparatus 300) via the network communicator 220. The operation of the base station 200 described above and described below may be an operation controlled by the controller 230. The controller 230 may include at least one processor capable of executing a program and a memory that stores the program. The processor may execute the program and perform the operation of the controller 230. The controller 230 may include a digital signal processor that performs digital processing of a signal transmitted and received via the antenna and the RF circuit. The digital processing includes processing of the protocol stack of the RAN. Note that the memory stores the program to be executed by the processor, parameters related to the program, and data related to the program. The whole or part of the memory may be added to the processor.

In the base station 200 configured as described above, the transmitter 211 transmits a retransmission parameter to the UE 100, where the retransmission parameter is a random access parameter used, in the RA procedure, for retransmission control on the RA preamble in a PRACH occasion. The retransmission parameter includes a specific retransmission parameter used exclusively in a case where the period of the PRACH occasion is to be changed by signaling of a lower layer lower than the RRC layer. This enables the UE 100 to use a specific retransmission parameter in a case where retransmission of the RA preamble is controlled. Due to the capability of configuring a specific retransmission parameter separately from a value of a usual retransmission parameter, control can be flexibly performed on the random access procedure in a case where dynamic adaptation of a PRACH occasion is performed. This enables the random access procedure to be appropriately performed in a case where dynamic adaptation of a PRACH occasion is performed.

### (First Embodiment)

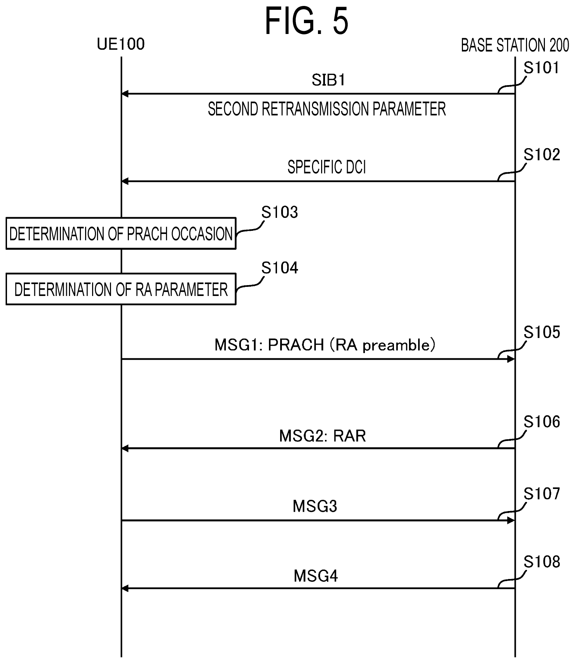

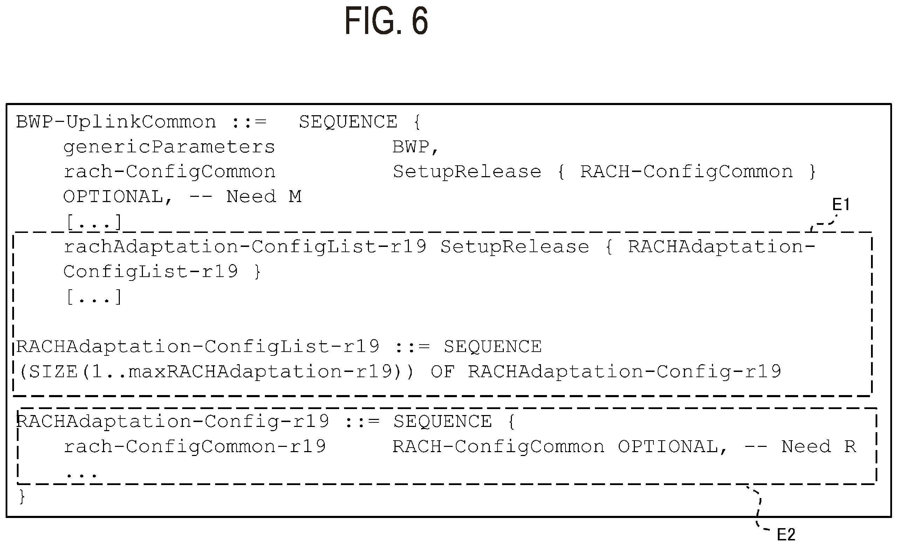

A first embodiment will next be described with reference to Figs. 5 and 6. Description that has already been provided may be omitted.

It is conceivable that, for example, the PRACH period is frequently changed in a certain base station 200 by signaling of a lower layer such as downlink control information (DCI) to save network energy. A longer PRACH period will reduce the chances of PRACH transmission. This may cause a plurality of UEs 100 that perform PRACH transmission (i.e., transmission of the random access (RA) preamble) to temporarily concentrate on a small number of chances of PRACH transmission. As a result, the base station 200 will easily be subject to congestion, which may cause concern that the random access procedure including performing of PRACH transmission is unable to be appropriately performed. Thus, an operation will next be described that enables the random access procedure to be appropriately performed in a case where dynamic adaptation of a PRACH occasion is performed.

In Fig. 5, the UE 100 may be in an RRC idle state or in an RRC inactive state with respect to a cell managed by the base station 200. Alternatively, the UE 100 may be in an RRC connected state with the cell. The cell may be a cell being camped on by the UE 100 or a cell selected or reselected by the UE 100. The cell may be a cell with which the UE 100 has established an RRC connection. In this example operation, the following description assumes that the UE 100 is in an RRC idle state.

Note that, from the standpoint of the UE 100, communication with the base station 200 may be communication with the cell. Therefore, from the standpoint of the UE 100, reception of information/message and/or the like from the base station 200 may be reception of information/message and/or the like from the cell, and transmission of information/message and/or the like to the base station 200 may be transmission of information/message and/or the like to the cell.

### Step S101:

The transmitter 211 of the base station 200 transmits a system information block type 1 (SIB1) message to the UE 100. The transmitter 211 of the base station 200 transmits the SIB1 message by broadcast. The receiver 112 of the UE 100 receives the SIB1 message from the base station 200 (or from the cell).

The SIB1 message may be a message that includes information related to evaluation of whether the UE 100 is allowed to access the cell. The SIB1 message may be a message that defines scheduling of other system information.

The SIB1 message includes information used to specify the random access parameter (which information is hereinafter referred to as RACH configuration common information). The RACH configuration common information may be, for example, "RACH-ConfigCommon" or "RACH-ConfigCommonTwoStepRA". The random access parameter may include a so-called cell-specific 4-step random access type parameter, or may include a so-called cell-specific 2-step random access type parameter.

The RACH configuration common information may be included in information used to configure a common parameter of an uplink bandwidth part (BWP) (which information is hereinafter referred to as BWP uplink common information (e.g., BWP-UplinkCommon)). The BWP uplink common information may be included in information that provides a common uplink parameter of the cell (which information is hereinafter referred to as uplink configuration common SIB information (e.g., UplinkConfigCommonSIB)). Note that the BWP uplink common information may be included in information used to configure an additional uplink bandwidth part (not for the initial BWP) (which information is hereinafter referred to as BWP uplink information (e.g., BWP-Uplink)). The uplink configuration common SIB information may be included in information used to configure a cell-specific parameter of the serving cell of the UE 100 using SIB1 (which information is hereinafter referred to as serving cell configuration common SIB information (e.g., ServingCellConfigCommonSIB)).

The RACH configuration common information may include information used to specify both random access parameters for regular random access and for beam failure recovery (which information is hereinafter referred to as RACH configuration generic information (e.g., RACH-ConfigGeneric)).

The RACH configuration generic information may include, for example, a PRACH configuration index (e.g., prach-ConfigurationIndex or msgA-PRACH-ConfigurationIndex), information of the number of PRACH transmission occasions (e.g., msg1-FDM or msgA-RO-FDM), information on the maximum number of times of the RA preamble (e.g., preambleTransMax), information on power control of PRACH transmission (e.g., powerRampingStep, preambleReceivedTargetPower, msgA-PreamblePowerRampingStep, or msgA-PreambleReceivedTargetPower), and information of the receive window length for the RA response (e.g., ra-ResponseWindow or msgB-ResponseWindow).

The information on the maximum number of times of the RA preamble may indicate, for example, the maximum number of RA preamble transmissions to be performed before failure declaration. The information on power control of PRACH transmission may indicate an RA parameter for controlling transmission power of the RA preamble. The information on power control of PRACH transmission may include, for example, information indicating a power ramping step for the PRACH (e.g., powerRampingStep or msgA-PreamblePowerRampingStep) and information indicating a target power level on the network reception side (e.g., preambleReceivedTargetPower or msgA-PreambleReceivedTargetPower). The information of the receive window length for the RA response may include information indicating the receive window length for Message 2 (e.g., ra-ResponseWindow) or may include information indicating the receive (monitoring) window length for Message B (e.g., msgB-ResponseWindow). The information of the receive window length may be represented by, for example, the number of slots.

In addition, the RACH configuration common information may include information indicating (a value for) a contention resolution timer (which information is hereinafter referred to as second timer information or contention resolution timer information (e.g., ra-ContentionResolutionTimer)). That value may be an initial value.

In this respect, the SIB1 message may include a retransmission parameter that is an RA parameter used, in the RA procedure, for retransmission control on the RA preamble in a PRACH occasion. The retransmission parameter may include, for example, the maximum number of times of, the receive window length for, and (a value for) the contention resolution timer for, the RA preamble. The retransmission parameter may include an RA parameter for controlling transmission power of the RA preamble. The retransmission parameter may be exclusive of an RA parameter for controlling transmission power of the RA preamble.

The retransmission parameter may include a usual retransmission parameter for use in a case where the period of the PRACH occasion is to be changed using RRC signaling (which parameter is hereinafter referred to as first retransmission parameter). The first retransmission parameter may include, for example, a parameter included in RACH configuration common information defined in 3GPP Technical specification before Release 19.

In addition, the controller 230 of the base station 200 may include configuration information related to dynamic adaptation (which configuration information is hereinafter referred to as DA configuration information) in the SIB1 message. Note that the controller 230 may include DA configuration information in an SIB1 message in a case where the cell supports dynamic adaptation. Meanwhile, in a case where the cell does not support dynamic adaptation, the controller 230 does not need to include DA configuration information in an SIB1 message.

In this respect, dynamic adaptation may be referred to as, for example, dynamic RACH adaptation. The dynamic adaptation may be, for example, at least one of the following operations (or definitions).
- The UE 100 switches the random access (RA) configuration by signaling of a lower layer lower than the RRC layer. In this respect, the signaling of a lower layer lower than the RRC layer may include MAC CE transmitted in the MAC layer. That is, information for use to switch the RA configuration may be included in MAC CE. For example, a logical channel identifier (LCID) for identifying information for use to switch the RA configuration may be defined. Information for use to switch the RA configuration, identified by that LCID, may be included in MAC CE. In addition, the signaling of a lower layer lower than the RRC layer may include downlink control information (also referred to as downlink control information format) transmitted on PDCCH in the physical layer. That is, downlink control information (or downlink control information format) including the information for use to switch the RA configuration may be transmitted on PDCCH. For example, the UE 100 may monitor the PDCCH in a search space configured for the downlink control information (or downlink control information format) including the information for use to switch the RA configuration, and may receive the downlink control information including the information for use to switch the RA configuration. In addition, a definition may be given of an RNTI in which the CRC added to the downlink control information is scrambled, where the downlink control information includes the information for use to switch the RA configuration. For example, the base station 200 may transmit system information including information for configuring the search space and/or information for configuring the RNTI (the value of the RNTI). In this respect, the RNTI (the value of the RNTI) may be calculated by the UE 100. For example, the RNTI (the value of the RNTI) may be calculated by the UE 100 on the basis of the PRACH configuration. For example, the RNTI (the value of the RNTI) may be calculated using a transmission timing (an SFN, a subframe, a slot, and/or a symbol) of the random access preamble (Message 1) determined on the basis of the PRACH configuration.
- The UE 100 supports a plurality of PRACH configurations.
- The UE 100 is configured with a plurality of PRACH configurations for one cell. In this respect, one cell may include a downlink cell and/or an uplink cell. In addition, the expression "configuring with a plurality of PRACH configurations" may include configuring with a plurality of PRACH configurations on the basis of a plurality of PRACH configurations included in the RACH configuration common information for one cell.
- The UE 100 is configured with a plurality of PRACH configurations for one bandwidth part (BWP). In this respect, one BWP may include a downlink BWP and/or an uplink BWP. That is, a plurality of PRACH configurations may be set to each of one or a plurality of BWPs (downlink BWP(s) and/or uplink BWP(s)) in one cell. In addition, the expression "configuring with a plurality of PRACH configurations" may include configuring with a plurality of PRACH configurations on the basis of a plurality of PRACH configurations included in the RACH configuration common information for one BWP.
- The UE 100 is configured with a plurality of PRACH configurations for one subcarrier spacing. In this respect, one subcarrier spacing may include a subcarrier spacing that is set for each of a downlink BWP and/or an uplink BWP. That is, a plurality of PRACH configurations may be set for one subcarrier spacing that is set for each of one or a plurality of BWPs (downlink BWP(s) and/or uplink BWP(s)) in one cell. In addition, one subcarrier spacing may include the subcarrier spacing of PRACH (also referred to as subcarrier spacing in PRACH transmission (Message 1)). That is, a plurality of PRACH configurations may be set for one subcarrier spacing that is set for PRACH. In this respect, the information for configuring the subcarrier spacing of PRACH may be included in the RACH configuration common information. That is, one common subcarrier spacing (e.g., one subcarrier spacing that is set for one BWP and/or one subcarrier spacing of PRACH) may be used for a plurality of PRACH configurations.
- The UE 100 is configured with a plurality of PRACH configurations for one component carrier. In this respect, one component carrier may include a downlink component carrier and/or an uplink component carrier.
- Changing the PRACH configuration on the basis of signaling of a lower layer lower than the RRC layer.

Note that the PRACH configuration is a configuration related to control of PRACH transmission. The PRACH configuration may include, for example, an RA configuration. The PRACH configuration may include a parameter related to control of PRACH transmission. The PRACH configuration may include, for example, at least one of a PRACH preamble index, a preamble subcarrier spacing (preamble SCS), PRACH resources (time resource and frequency resource), and/or a period of a PRACH occasion. The PRACH configuration may include an RA parameter related to control of PRACH transmission.

The DA configuration information may include a specific PDCCH configuration for exclusively monitoring PDCCH (or DCI) that triggers changing of the RA configuration. The specific PDCCH configuration may be information for configuring a search space (common search space) and/or a CORESET each dedicated to dynamic adaptation. Note that the controller 230 may include the specific PDCCH configuration in another system information block (e.g., SIBx) or in a dedicated RRC message.

The DA configuration information may include configuration information for configuring the UE 100 with a plurality of RA configurations for determining a PRACH occasion. Note that the plurality of RA configurations may be formed of (only) usual RA configurations, which are not specific RA configurations, (only) specific RA configurations (described later), or a combination of one or more usual RA configurations and one or more specific RA configurations. Note that the usual RA configurations may each be, for example, a configuration usable for configuring the UE 100 that does not support dynamic adaptation (that is, having no dynamic adaptation capability) (which may also be referred to as legacy UE). The usual RA configurations may each be, for example, an RA configuration defined in Technical specification of a release before the release of Technical specification that has introduced the feature of dynamic adaptation. Note that a usual RA configuration may be referred to as first RA configuration, and a specific RA configuration may be referred to as second RA configuration.

The DA configuration information may include, as configuration information for configuring the UE 100 with a plurality of RA configurations, for example, a list formed of a plurality of specific RA configurations that are used to configure the period of the PRACH occasion and are to be changed by signaling of a lower layer (which list is hereinafter referred to as RACH adaptation configuration list).

As illustrated in Fig. 6, the RACH adaptation configuration list (e.g., RACHAdaptation-ConfigList(-r19)), for example, may be included in the BWP uplink common information. The BWP uplink common information may include a RACH adaptation configuration list separately from RACH configuration common information including a first RA parameter (described later) (see E1 of Fig. 6). A specific RA configuration may be referred to as, for example, RACH adaptation configuration information (e.g., RACHAdaptation-Config(-r19)), or may be a configuration specified by the RACH adaptation configuration information. The RACH adaptation configuration information may include, for example, RACH configuration common information (e.g., rach-ConfigCommon(-r19)) including a second RA parameter (described later) (see E2 of Fig. 6).

Each of the plurality of specific RA configurations may be associated with an index. For example, the RACH adaptation configuration information may include an index. The index may be included in the RACH configuration common information or in the RACH adaptation configuration information in parallel with being included in the RACH configuration common information. The association between the index and a specific RA configuration may be provided by this. The index may be used, for example, to specify a specific RA configuration by signaling of a lower layer. The index may be, for example, an identifier of a specific RA configuration and/or an identifier of RACH adaptation configuration information. The index may be a PRACH configuration index.

The specific RA configuration may be an RA configuration dedicated to dynamic adaptation. The specific RA configuration may include, for example, a PRACH preamble format dedicated to dynamic adaptation and an allocation configuration in time domain of a PRACH occasion dedicated to dynamic adaptation. The specific RA configuration may include, as the index, a PRACH configuration index dedicated to dynamic adaptation.

In addition, (at least part of) the specific RA configurations may be predefined in Technical specification. For example, a specific RA configuration table dedicated to dynamic adaptation may be predefined in Technical specification. The specific RA configuration table may provide association between (at least part of) the specific RA configurations and PRACH configuration indexes. (At least part of) the specific RA configurations may include, for example, at least one of a PRACH preamble format and an allocation configuration in time domain of a PRACH occasion. The controller 120 of the UE 100 may store (at least part of) the specific RA configurations. (At least part of) the specific RA configurations may include, for example, at least one of "Preamble format", "x" and "y" defined by "n_{f} mod x = y", "Subframe number", "Starting symbol", "Number of PRACH slots within a subframe", "number of time-domain PRACH occasions within a PRACH slot", and "PRACH duration".

Furthermore, the DA configuration information may include a dedicated RA parameter (which may hereinafter be referred to as second RA parameter) that is applied (used) only during performance of dynamic adaptation. The second RA parameter may be an RA parameter changed by signaling of a lower layer. The second RA parameter may be a specific RA parameter used exclusively in a case where the period of the PRACH occasion is to be changed by signaling of a lower layer. The second RA parameter may include, as the retransmission parameter, a specific retransmission parameter used exclusively in a case where the period of the PRACH occasion is to be changed by signaling of a lower layer (which retransmission parameter may hereinafter be referred to as second retransmission parameter). Note that an RA parameter not dedicated to dynamic adaptation may be referred to as first RA parameter.

The second retransmission parameter may be included in, for example, at least one of (i) information used to configure a parameter related to dynamic adaptation (which information is hereinafter referred to as RACH adaptation configuration information (e.g., RACHAdaptation-Config(-r19))), (ii) RACH configuration common information (e.g., RACH-ConfigCommon-r19), and (iii) RACH configuration generic information (e.g., RACH-ConfigGeneric-r19). The DA configuration information may be any one type of information described in (i) to (iii). The RACH configuration common information and the RACH configuration generic information may be information newly provided in Technical specification of or after the release that has introduced the feature of dynamic adaptation.

The second retransmission parameter may include, for example, at least one of the maximum number of times of the RA preamble (e.g., preambleTransMaxRACHAdaptation(-r19)), the receive window length (e.g., Ra-ResponseWindowRACHAdaptation(-r19)), and (a value for) the contention resolution timer (e.g., Ra-ContentionResolutionTimerRACHAdaptation(-r19)). The second retransmission parameter may include an RA parameter for controlling transmission power of the RA preamble. The second retransmission parameter may be exclusive of an RA parameter for controlling transmission power of the RA preamble.

The largest value of the maximum number of times of the RA preamble in the second retransmission parameter may be greater than the largest value of the maximum number of times of the RA preamble in the first retransmission parameter. The largest value of the receive window length of the second retransmission parameter may be greater than the largest value of the receive window length of the first retransmission parameter. The largest value of (the value for) the contention resolution timer of the second retransmission parameter may be greater than the largest value of (the value for) the contention resolution timer of the first retransmission parameter.

In this manner, the transmitter 211 of the base station 200 can transmit a retransmission parameter (e.g., the second retransmission parameter) to the UE 100 by the SIB1 message. The receiver 112 of the UE 100 can receive a retransmission parameter (e.g., the second retransmission parameter) from the base station 200.

### Step S102:

The transmitter 211 of the base station 200 transmits a signaling of a lower layer lower than the RRC layer, to the UE 100. The receiver 112 of the UE 100 receives the signaling of a lower layer from the base station 200. The signaling of a lower layer may be DCI. The signaling of a lower layer may be PDCCH that carries DCI. The signaling of a lower layer may be signaling in the MAC layer (e.g., MAC CE). In this example operation, the following description assumes that the signaling of a lower layer is DCI.

In a case where, for example, the PRACH period of the UE 100 is to be changed, the transmitter 211 of the base station 200 may transmit DCI including a specific field (or configured with a specific field) (hereinafter referred to as specific DCI) used for changing the PRACH period. Note that in a case where the PRACH period of the UE 100 is not to be changed, the transmitter 211 may transmit DCI not including a specific field (or configured without a specific field) (hereinafter referred to as usual DCI). The specific DCI may be information that triggers changing of the PRACH period and/or changing of the RA configuration, of the UE 100. Meanwhile, the usual DCI may be information that does not trigger either changing of the PRACH period or changing of the RA configuration, or both, of the UE 100.

The specific field may be a field for changing the PRACH period. In addition, the specific field may be, for example, a field for changing the RA configuration. The specific field may include specific field information. The specific field information may be information for changing the PRACH period. In addition, the specific field information may be information for changing the random access configuration. Details of the specific field information will be described later.

In a case where the UE 100 is configured with a specific PDCCH configuration, the transmitter 211 of the base station 200 may transmit specific DCI using a search space and/or a CORESET each dedicated to dynamic adaptation. Note that the transmitter 211 may use a search space and/or a CORESET configured with a usual PDCCH configuration to transmit usual DCI.

Note that the specific DCI may be DCI having a CRC (also called a CRC parity bit) added thereto, scrambled with a predetermined radio network temporary identifier (RNTI). The specific DCI may be information that triggers changing of the RA configuration. PDCCH including the specific DCI may also be referred to as PDCCH accompanied by the predetermined RNTI or as PDCCH addressed to the predetermined RNTI. The predetermined RNTI may be SI-RNTI, P-RNTI, RA-RNTI, and/or RNTI dedicated to dynamic adaptation.

Note that the UE 100 may be configured with a search space and a CORESET that are for monitoring the specific DCI, for one DL BWP or for each of a plurality of DL BWPs. In this case, the controller 120 of the UE 100 may perform control to cause (PRACH transmission based on) the dynamic adaptation to be performed in an uplink bandwidth part (UL BWP) corresponding to the DL BWP by which DCI has received.

The controller 120 of the UE 100 may determine whether the DCI received is usual DCI or specific DCI. The controller 120 may make the determination on the basis of whether the DCI received includes a specific field (and/or specific field information). The controller 120 may make the determination, for example, using one of the following methods.

Firstly, in a case where, for example, PDCCH has been successfully decoded with a predetermined RNTI (e.g., RNTI dedicated to dynamic adaptation), the controller 120 may determine that the DCI received is specific DCI. Alternatively, in a case where PDCCH has failed to be decoded with a predetermined RNTI (e.g., RNTI dedicated to dynamic adaptation), the controller 120 may determine that the DCI received is usual DCI.

Secondly, in a case where a dedicated PDCCH configuration has been configured, the controller 120 may determine that DCI received in a search space and/or a CORESET each dedicated to dynamic adaptation is specific DCI. Meanwhile, the controller 120 may determine that DCI received in a search space and/or in a CORESET each configured with a usual PDCCH configuration is usual DCI.

Thirdly, in a case where DCI determination information for determining specific DCI has been received from the base station 200, the controller 120 may make the determination on the basis of the DCI determination. Note that the transmitter 211 of the base station 200 transmits the DCI determination information to the UE 100. The receiver 112 of the UE 100 receives the DCI determination information from the base station 200. The DCI determination information may be included, for example, in the DA configuration information.

The DCI determination information may be, for example, information indicating whether the DCI includes a specific field and/or specific field information. In a case where the DCI determination information indicates that the DCI includes a specific field and/or specific field information, the controller 120 may determine that the DCI received is specific DCI. Alternatively, in a case where the DCI determination information indicates that the DCI does not include either a specific field or specific field information or both, the controller 120 may determine that the DCI received is usual DCI.

In this example operation, the following description assumes that the controller 120 of the UE 100 determines that the DCI received is specific DCI.

Note that in a case where, for example, no second RA parameter to be changed by lower layer signaling has been received, the controller 120 of the UE 100 may ignore specific DCI even in a case where the specific DCI has been received. In a case where, for example, the SIB1 message includes no RACH adaptation configuration information, the controller 120 may ignore specific DCI. In a case where the controller 120 ignores specific DCI, the controller 120 may perform PRACH transmission not based on dynamic adaptation and/or a random access procedure not based on dynamic adaptation. In a case where the controller 120 ignores specific DCI, the controller 120 does not need to perform a random access procedure. Therefore, the controller 120 may regard the specific DCI itself as invalid.

### Step S103:

The controller 120 of the UE 100 determines the PRACH occasion. In addition, the controller 120 may specify the PRACH period. The controller 120 may perform, for example, at least one of the following methods.

In the first method, the controller 120 may change (select) the RA configuration used for determining the PRACH occasion on the basis of specific DCI. The controller 120 selects the new, changed RA configuration, as the RA configuration for use in the RA procedure. The controller 120 may determine the PRACH occasion and the PRACH period on the basis of the new, changed RA configuration (i.e., the selected RA configuration). The controller 120 may determine the PRACH occasion and the PRACH period on the basis of specific field information included in the specific field.

The specific field information may include, for example, information indicating an index. The controller 120 may change the RA configuration to the RA configuration indicated by the index. In a case where the UE 100 is configured with a plurality of RA configurations, the controller 120 of the UE 100 may change the RA configuration to the RA configuration indicated by the index among the plurality of RA configurations configured. The controller 120 may select, for example, a specific RA configuration associated with the index among the plurality of specific RA configurations listed in the RACH adaptation configuration list. This enables the controller 120 to select the specific RA configuration for use in the RA procedure on the basis of lower layer signaling.

The specific field information may also include information indicating the position of entry of the specific RA configuration in the RACH adaptation configuration list. The controller 120 may select the specific RA configuration in the position indicated by that information and change the RA configuration to the RA configuration selected. In this manner, the controller 120 can select the specific RA configuration for use in the RA procedure.

The controller 120 determines a radio frame to which the PRACH occasion is to be allocated, a slot to which the PRACH occasion is to be allocated, and a symbol to which the PRACH occasion is to be allocated, on the basis of the new, changed RA configuration. This enables the PRACH occasion and the PRACH period to be determined.

In the second method, the controller 120 may specify the new, changed PRACH period on the basis of a configuration value for adjusting the PRACH period. The controller 120 may calculate, for example, a PRACH period on the basis of a configuration value, different from an RA configuration-based PRACH period that has already been set. The controller 120 may specify the calculated PRACH period as the new, changed PRACH period. The controller 120 may also calculate a PRACH period on the basis of a configuration value, different from the PRACH period based on the RA configuration (or the specific RA configuration) determined using the first method.

The configuration value may be a scaling factor for periodicity modification. The scaling factor may be a scaling factor that extends the periodicity of an RA configuration (or a specific RA configuration) that serves as a baseline. The controller 230 of the base station 200 may add the configuration value to, for example, a specific DCI. The receiver 112 of the UE 100 may receive the configuration value from the base station 200.

Note that, in the second method, the controller 120 may use, as the RA configuration, the first RA configuration or the second RA configuration to determine the PRACH occasion.

### Step S104:

The controller 120 of the UE 100 determines the RA parameter for use in the random access procedure. The controller 120 may determine, for example, either the first RA parameter or the second RA parameter as the RA parameter for use in the RA procedure.

In a case where, for example, the PRACH period or the RA configuration has been changed by RRC signaling, the controller 120 may determine the first RA parameter as the RA parameter for use in the RA procedure.

Alternatively, for example, in at least one of the following cases, the controller 120 may determine the second RA parameter as the RA parameter for use in the RA procedure.
- A case where the PRACH period or the RA configuration has been changed through dynamic adaptation.
- A case where the PRACH period or the RA configuration has been changed on the basis of specific DCI.
- The second RA configuration has been selected or the RA configuration has been changed to the second RA configuration, as the configuration for use in the random access procedure.

In a case where, for example, each of the plurality of second RA configurations is associated with a second RA parameter, the controller 120 may use the second RA parameter associated with the selected second RA configuration (i.e., the new, changed RA configuration). Thus, the controller 120 may use, in the RA procedure, the second retransmission parameter associated with the selected second RA configuration. The controller 120 may use the second retransmission parameter in a case where specific DCI has been received.

The controller 120 performs the RA procedure using the RA parameter determined. The controller 120 controls retransmission of the RA preamble on the basis of the retransmission parameter.

Note that even in a case where the second RA parameter is to be used, the controller 120 may use the first RA parameter for some of the RA parameters. Even in a case where, for example, at least one of the maximum number of times of, the receive window length for, and (the value for) the contention resolution timer for, the RA preamble included in the second RA parameter is to be used, the controller 120 may use, as the RA parameter for controlling transmission power of the RA preamble, information indicating the power ramping step for the PRACH included in the first RA parameter and information indicating the target power level on the network reception side. For example, the controller 120 may use information indicating the power ramping step for PRACH included in the RACH configuration common information including the first RA parameter and information indicating a target power level on the network reception side, by using the maximum number of times of, the receive window length for, and (the value for) the contention resolution timer for, the RA preamble included in the DA configuration information. As described above, even in a case where the PRACH period is to be changed by signaling of a lower layer, the controller 120 may use a parameter for use in a case where the PRACH period is to be changed by signaling of the RRC layer, that is, the first RA parameter, as the RA parameter for controlling transmission power of the RA preamble.

In addition, in a case where the RA configuration is (and/or the PRACH period are/is) to be changed, the controller 120 of the UE 100 may re-map the SSB (SSB index) on a PRACH occasion. The controller 120 may map the SSB (SSB index) to a PRACH occasion in consideration of the PRACH period, the PRACH configuration period, the association period, and/or the association pattern period.

The SSB may be a cell-defining SSB (CD-SSB) and/or a non-cell defining SSB (NCD). The UE 100 may perform dynamic adaptation always on the basis of a CD-SSB. With respect to the controller 120 of the UE 100, information for configuring a subcarrier spacing for an SSB in a serving cell and/or in a downlink bandwidth part (DL BWP) may be included in the SIB or in the RRC message.

In addition, the information for configuring the subcarrier spacing for PRACH may be added to RACH configuration information (e.g., RACH-config common). Such information may be added to predetermined configuration information (e.g., BWP-UplinkCommon) in the RACH configuration information. "BWP-UplinkCommon" may be information used for configuring a parameter common to uplink BWPs. The subcarrier spacing may be configured for each of one or a plurality of DL BWPs (e.g., initial DL BWP and/or dedicated DL BWP) and one or a plurality of UL BWPs (e.g., initial UL BWP and/or dedicated UL BWP).

### Step S105:

The transmitter 111 of the UE 100 performs PRACH transmission using the determined PRACH occasion. The transmitter 111 transmits the RA preamble (Message 1) to the base station 200 on PRACH. The receiver 212 of the base station 200 receives the RA preamble (Message 1) from the UE 100.

The controller 120 starts a receive window after the PRACH transmission. In this example operation, the controller 120 may start a receive window having the receive window length for the second retransmission parameter. In addition, in this example operation, the controller 120 may perform the following control using the maximum number of times of the RA preamble in the second retransmission parameter.

In this respect, in a case where no RA response is received within the receive window, the controller 120 considers that reception of the RA response is not successful. The controller 120 increments a preamble transmission counter (e.g., PREAMBLE_TRANSMISSION_COUNTER) by 1 each time the controller 120 considers that reception of the RA response is not successful.

In a case where the value of the preamble transmission counter reaches "the maximum number of times of the RA preamble + 1" and the PRACH has been transmitted using the SpCell, the controller 120 indicates a problem in random access to an upper layer above the MAC layer. Alternatively, in a case where the value of the preamble transmission counter reaches "the maximum number of times of the RA preamble + 1" and the PRACH has been transmitted using the SCell, the controller 120 considers that the random access procedure has not been successfully completed. In a case where the random access procedure is not completed, the controller 120 performs PRACH retransmission, that is, retransmission of the RA preamble. In this manner, the controller 120 controls retransmission of the RA preamble on the basis of the maximum number of times of the RA preamble and the receive window. The controller 120 may perform the processing of step S105 once again.

### Step S106:

The transmitter 211 of the base station 200 transmits an RA response (RAR: Message 2) to the UE 100. The receiver 112 of the UE 100 receives the RA response from the base station 200.

### Step S107:

The transmitter 111 of the UE 100 transmits Message 3 to the base station 200. The receiver 212 of the base station 200 receives Message 3 from the UE 100.

The controller 120 may start the contention resolution timer after transmission of Message 3. In this example operation, the controller 120 may start a contention resolution timer for the second retransmission parameter.

In this respect, in a case where the controller 120 does not receive Message 4 before expiration of the contention resolution timer, the controller 120 considers that the contention resolution is not successful. The controller 120 increments the preamble transmission counter (e.g., PREAMBLE_TRANSMISSION_COUNTER) by 1 each time the controller 120 considers that the contention resolution is not successful.

In a case where the value of the preamble transmission counter reaches "the maximum number of times of the RA preamble + 1" and the controller 120 indicates a problem in random access to an upper layer above the MAC layer. In a case where the contention resolution is not completed, the controller 120 performs PRACH retransmission, that is, retransmission of the RA preamble. In this manner, the controller 120 controls retransmission of the RA preamble on the basis of the maximum number of times of the RA preamble and the receive window. The controller 120 may perform the processing of step S105 once again.

### Step S108:

The transmitter 211 of the base station 200 transmits Message 4 to the UE 100. The receiver 112 of the UE 100 receives Message 4 from the base station 200.

As described above, the transmitter 211 of the base station 200 transmits a retransmission parameter to the UE 100, where the retransmission parameter is a random access parameter used, in the RA procedure, for retransmission control on the RA preamble in a PRACH occasion. The receiver 112 of the UE 100 receives the retransmission parameter from the base station 200. The controller 120 controls retransmission of the RA preamble on the basis of the retransmission parameter. The retransmission parameter includes a specific retransmission parameter used exclusively in a case where the period of the PRACH occasion is to be changed by signaling of a lower layer lower than the RRC layer. This enables the UE 100 to use a specific retransmission parameter in a case where retransmission of the RA preamble is controlled. Due to the capability of configuring a specific retransmission parameter separately from a value of a usual retransmission parameter, control can be flexibly performed on the random access procedure in a case where dynamic adaptation of a PRACH occasion is performed. This enables the random access procedure to be appropriately performed in a case where dynamic adaptation of a PRACH occasion is performed. In addition, setting, to the UE 100, an appropriate retransmission parameter depending on, for example, the situation of the PRACH transmission load of the plurality of UEs 100 enables the base station 200 to flexibly control the RA procedure. Moreover, setting an appropriate retransmission parameter enables the base station 200 to be less likely to fail in the RA procedure, and to reduce or prevent a delay before completion of the RA procedure.

In addition, the specific retransmission parameter may be included in the SIB1 message. This eliminates the need for the base station 200 to individually notify each UE 100 of a specific retransmission parameter, thereby enabling saving of the energy of the network 10.

Furthermore, the specific retransmission parameter may include at least one of a value indicating the receive window length for the RA response, which is a response to the RA preamble; a value of the contention resolution timer for triggering retransmission of the RA preamble; and a value indicating the maximum number of times of transmission of the RA preamble. This enables the random access procedure to be flexibly controlled in a case where dynamic adaptation of a PRACH occasion is performed.

For example, the controller 230 of the base station 200 can set the maximum number of times of the RA preamble in the second retransmission parameter to a value different from the maximum number of times of the RA preamble in the first retransmission parameter. In addition, the controller 230 of the base station 200 can set the receive window length of the second retransmission parameter to a value different from the receive window length of the first retransmission parameter. Moreover, the base station 200 can set (the value for) the contention resolution timer of the second retransmission parameter to a value different from (the value for) the contention resolution timer of the first retransmission parameter. This enables the random access procedure to be flexibly controlled in a case where dynamic adaptation of a PRACH occasion is performed.

Note that the controller 230 of the base station 200 may set, for example, the maximum number of times of the RA preamble in the second retransmission parameter for use in a case where the PRACH period is to be changed to a long period by lower layer signaling, to a value greater than the maximum number of times of the RA preamble in the first retransmission parameter. In this respect, a longer PRACH period will reduce the chances of PRACH transmission. This may cause the RA preambles of a plurality of UEs 100 to be more likely to contend with each other, and may thus cause transmission of the RA preamble to become less likely to succeed. Nevertheless, use of a large value for the maximum number of times of the RA preamble allows, for example, an increase in the number of times of retransmitting the PRACH transmission until the random access procedure is considered to be successfully completed. This makes the random access procedure less likely to fail.

On the other hand, the controller 230 of the base station 200 may set the maximum number of times of the RA preamble in the second retransmission parameter for use in a case where the PRACH period is to be changed to a short period by lower layer signaling, to a value less than the maximum number of times of the RA preamble in the first retransmission parameter. In this respect, a shorter PRACH period will increase the chances of PRACH transmission. This may cause the RA preambles of a plurality of UEs 100 to be less likely to contend with each other, and may thus cause transmission of the RA preamble to become more likely to succeed. In such case, use of a small value for the maximum number of times of the RA preamble causes, for example, a decrease in the number of times of retransmitting the PRACH transmission until the random access procedure is considered to be successfully completed. Even in such a case, the UE 100 can easily select another resource as the resource for PRACH for use in the random access procedure in a case where the random access procedure has failed.

In addition, the controller 230 of the base station 200 may set the receive window length of the second retransmission parameter for use in a case where the PRACH period is to be changed to a long period by lower layer signaling, to a value greater than the receive window length of the first retransmission parameter. Assume now that a plurality of UEs 100 each transmit the RA preamble using PRACH, temporarily concentrating on a small number of chances of PRACH transmission. In a case where there are limited resources in a certain duration, the base station 200 that has received a large number of RA preambles needs to use a resource later than the certain duration as a resource for transmitting some of Messages 2 due to insufficient resources for transmitting Messages 2 in the certain duration. This may cause the receive window for the first retransmission parameter to terminate before the UE 100 receives Message 2, and the UE 100 to accordingly retransmit the RA preamble even though the base station 200 is about to send Message 2. Thus, use of a value, as the receive window length of the second retransmission parameter, that is greater than the receive window length of the first retransmission parameter allows the UE 100 to more easily receive Message 2 before the receive window for the second retransmission parameter terminates even in a case where a resource later than a certain duration needs to be used as a resource for transmitting some of Messages 2. This enables the UE 100 to prevent performing retransmission of the RA preamble even though the base station 200 is about to transmit Message 2, and to thus appropriately perform the random access procedure.

In addition, the controller 230 of the base station 200 may set (the value for) the contention resolution timer of the second retransmission parameter for use in a case where the PRACH period is to be changed to a long period by lower layer signaling, to a value greater than (the value for) the contention resolution timer of the first retransmission parameter. Similarly to the case of Message 2, expiration of the contention resolution timer of the first retransmission parameter before the UE 100 receives Message 4 may cause the UE 100 to retransmit the RA preamble even though the base station 200 is about to send Message 4. Thus, use of a value, as (the value for) the contention resolution timer of the second retransmission parameter, that is greater than (the value for) the contention resolution timer of the first retransmission parameter allows the UE 100 to more easily receive Message 4 before the contention resolution timer of the second retransmission parameter expires. This enables the UE 100 to prevent performing retransmission of the RA preamble even though the base station 200 is about to transmit Message 4, and to thus appropriately perform the random access procedure.

Moreover, the controller 120 may use the specific retransmission parameter in a case where a signaling of a lower layer for changing the period of the PRACH occasion is received. This enables the controller 120 to use an appropriate one of a usual retransmission parameter and the specific retransmission parameter by not using the specific retransmission parameter (that is, by using a usual retransmission parameter) in a case where the PRACH period is to be changed using a conventional method, that is, by signaling of the RRC layer.

In addition, in a case where a random access parameter to be changed by signaling of a lower layer has not been received, the controller 120 may ignore the signaling of a lower layer for changing the period of the PRACH occasion even in a case where such signaling of a lower layer has been received. This allows the UE 100 to avoid using a wrong random access parameter, and to thus appropriately perform the random access procedure.

Furthermore, the receiver 112 may receive, from the base station 200, a list formed of a plurality of specific RA configurations that are used to configure the period of the PRACH occasion and are to be changed by signaling of a lower layer. The controller 120 may select the specific RA configuration for use in the RA procedure on the basis of signaling of a lower layer from the base station 200. This enables the base station 200 to configure a plurality of RA configurations for the UE 100, and to flexibly control PRACH transmission.

In addition, the signaling of a lower layer may include information indicating the position of entry of the specific RA configuration in the RACH adaptation configuration list. The controller 120 may select a specific RA configuration in the position indicated by that information. This enables a specific RA configuration to be specified without including an index in the RACH adaptation configuration list, and enables radio resources to be saved.

Moreover, each of the plurality of specific RA configurations may be associated with an index. The signaling of a lower layer may include information indicating an index. The controller 120 may select a specific RA configuration associated with the index. This enables the base station 200 to associate, for example, information not included in the RACH adaptation configuration list with a specific RA configuration using the index. As a result, the base station 200 can specify other information to the UE 100 together with the specific RA configuration, and can thus flexibly control PRACH transmission.

Furthermore, each of the plurality of specific RA configurations may be associated with a specific retransmission parameter. The controller 120 may use, in the RA procedure, the specific retransmission parameter with which the selected specific RA configuration is associated. This enables the base station 200 to specify a specific retransmission parameter to the UE 100 together with the specific RA configuration, and to thus flexibly control PRACH transmission.

Even in a case where the period of the PRACH occasion is to be changed by signaling of a lower layer, the controller 120 may use a parameter for use in a case where the period of the PRACH occasion is to be changed by signaling of the RRC layer, as the RA parameter for controlling transmission power of the RA preamble. As compared with the receive window and the contention resolution timer, transmission power of the RA preamble is unlikely to affect failure of the random access procedure caused by a change of the PRACH period. This enables the base station 200 to skip transmission of the parameter for controlling the transmission power of the preamble used exclusively in a case where the period of the PRACH occasion is to be changed by signaling of a lower layer, and to thus save the radio resources.

### (Second Embodiment)

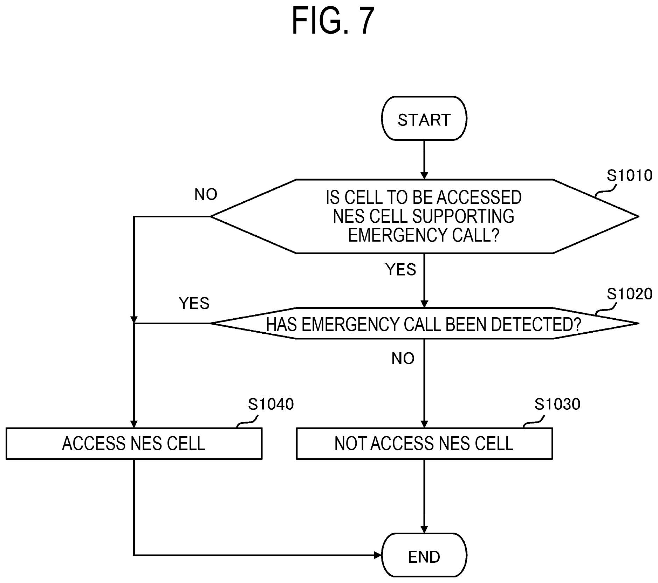

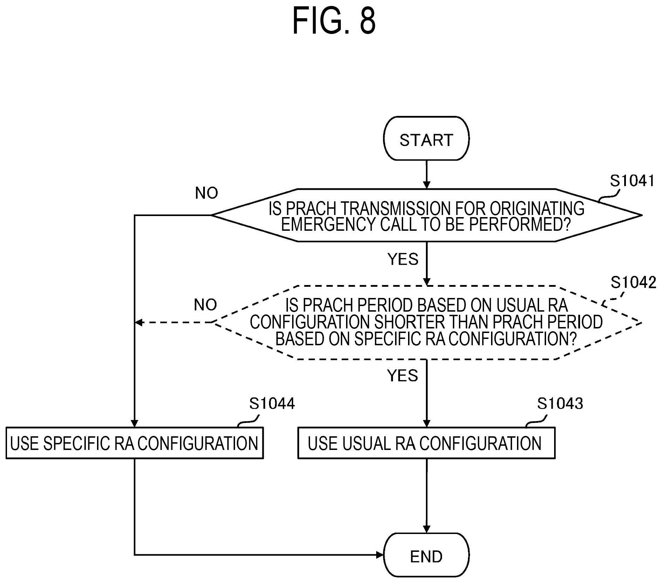

A second embodiment will next be described with reference to Figs. 7 and 8. Description that has already been provided may be omitted.

It has been proposed to inhibit a UE 100 having no capability of performing an operation related to NES (hereinafter, NES capability) from accessing an NES cell. This enables energy of the network 10 to be saved by NES.

However, for example, inaccessibility of a UE 100 having no NES capability to an NES cell may cause a concern that a necessary service will be unavailable to the UE 100. Thus, an operation for making a necessary service available to a UE 100 having no NES capability will next be described.

A UE 100 having no NES capability (referred to as a non-NES capable UE 100) may be, for example, a UE 100 that does not support operation related to NES. The non-NES capable UE 100 may be, for example, a UE 100 that does not support the above-described dynamic adaptation. The non-NES capable UE 100 may be a so-called legacy UE. The non-NES capable UE 100 may be a UE that cannot temporarily perform an operation related to NES.

The NES cell may be, for example, a cell managed by the base station 200 that follows a certain operation related to the NES capability.

As illustrated in Fig. 7, the controller 120 of the non-NES capable UE 100 may perform the following operation in attempting to access an NES cell.

### Step S1010:

The controller 120 determines whether the NES cell to be accessed is an NES cell that supports an emergency call (hereinafter, a supporting NES cell). In a case where the NES cell is a supporting NES cell, the controller 120 performs the processing of step S1020. Alternatively, in a case where the NES cell is not a supporting NES cell, the controller 120 performs the processing of step S1040.

The controller 120 may determine whether the NES cell is a supporting NES cell, for example, on the basis of the SIB message received from the NES cell. For example, in a case where the SIB message includes NES cell information indicating whether that cell is a supporting NES cell, the controller 120 may determine whether that cell is a supporting NES cell on the basis of the NES cell information. The NES cell information may be, for example, eCallOverIMS-Support included in the SIB1 message. The eCallOverIMS-Suppor field indicates whether that cell supports eCall over an internet protocol (IP) multimedia subsystem (IMS) service. The SIB message may be the SIB1 message or another SIB message.

In a case where the NES cell information indicates that the NES cell is a supporting NES cell, the controller 120 may perform the processing of step S1020. In a case where the NES cell information indicates that the NES cell is a supporting NES cell, the controller 120 may perform the processing of step S1020. In a case where the NES cell information indicates that the NES cell is not a supporting NES cell, the controller 120 may perform the processing of step S1040.

In addition, in a case where the SIB message does not include NES cell information indicating that the NES cell is not a supporting NES cell, the controller 120 may perform the processing of step S1020. Alternatively, in a case where the SIB message does not include NES cell information indicating that the NES cell is a supporting NES cell, the controller 120 may perform the processing of step S1040.

The controller 120 may make the following determination instead of the above determination. Alternatively, the controller 120 may make the following determination in addition to the above determination. In a case where the NES cell is a supporting NES cell, the controller 120 may perform the following determination.

The controller 120 may determine whether the NES cell inhibits or permits access (camp) from, and/or cell selection/reselection by, a non-NES capable UE 100, for example, on the basis of the SIB message received from the NES cell. For example, in a case where the SIB message includes NES cell access information indicating whether access to that cell by a non-NES capable UE 100 is inhibited or permitted, the controller 120 may determine whether to access that cell and/or to select/reselect that cell on the basis of the NES cell access information. The NES cell access information may be information dedicated to a non-NES capable UE 100 (e.g., intraFreqReselectionNonNES) included in the SIB1 message. In a case where the SIB message does not include intraFreqReselectionNonNES, the controller 120 may consider that access to that cell and/or cell selection/reselection are/is inhibited. In a case where the SIB message includes intraFreqReselectionNonNES, and intraFreqReselectionNonNES indicates permission, the controller 120 may consider that access to that cell and/or cell selection/reselection are/is permitted. In a case where the SIB message includes intraFreqReselectionNonNES, and intraFreqReselectionNonNES indicates inhibition, the controller 120 may consider that access to that cell and/or cell selection/reselection are/is inhibited. The SIB message may be the SIB1 message or another SIB message.

In a case where the controller 120 considers (determines) that the access to the cell and/or cell selection/cell reselection are/is permitted, the controller 120 may perform the processing of step S1020. Alternatively, in a case where the controller 120 considers (determines) that the access to the cell and/or cell selection/cell reselection are/is inhibited, the controller 120 may perform the processing of step S1040.

### Step S1020:

The controller 120 determines whether an emergency call has been detected. In a case where an emergency call has been detected, the controller 120 performs the processing of step S1030. In a case where no emergency call has been detected, the controller 120 performs the processing of step S1040.

### Step S1030:

The controller 120 does not access the NES cell. The controller 120 may search for another cell.

### Step S1040:

The controller 120 accesses the NES cell. The controller 120 may perform PRACH transmission in accessing the NES cell. As illustrated in Fig. 8, the controller 120 may perform the following operation.

### Step S1041:

The controller 120 may determine whether to perform PRACH transmission for originating an emergency call. In a case where PRACH transmission is to be performed according to a trigger of the emergency call, the controller 120 may perform the processing of step S1042. Alternatively, in a case where PRACH transmission is to be performed without a trigger of an emergency call, the controller 120 may perform the processing of step S1044.

For example, in a case where the UE 100 supports dynamic adaptation, that is, in a case where the UE 100 has capability regarding dynamic adaptation, the controller 120 may perform the processing of step S1042. For example, in a case where the UE 100 does not support dynamic adaptation, that is, in a case where the UE 100 has no capability regarding dynamic adaptation, the controller 120 may skip the processing of step S1042 and perform the processing of step S1043.

Note that use of a usual RA configuration in originating an emergency call may be predefined in Technical specification. In this case, the controller 120 may skip the processing of step S1042 and perform the processing of step S1043.

In addition, the transmitter 211 of the base station 200 may transmit, to the UE 100, information for determining the RA configuration to be used upon originating an emergency call (which information is hereinafter referred to as RA configuration determination information). The receiver 112 of the UE 100 may receive the RA configuration determination information from the base station 200. The RA configuration determination information may be included in, for example, the SIB message.

The RA configuration determination information may indicate, for example, an RA configuration that is either a usual RA configuration or a specific RA configuration, whichever is to be preferentially used upon originating an emergency call. The RA configuration determination information may indicate that a usual RA configuration is to be (preferentially) used upon originating an emergency call. The RA configuration determination information may indicate that a specific RA configuration is to be (preferentially) used upon originating an emergency call. The RA configuration determination information may also indicate that an RA configuration that is either a usual RA configuration or a specific RA configuration may be used upon originating an emergency call.

The controller 120 may determine which RA configuration to use on the basis of the RA configuration determination information. In a case where the RA configuration determination information indicates that a usual RA configuration is to be used upon originating an emergency call, the controller 120 may perform the processing of step S1043.

In a case where the RA configuration determination information indicates that a specific RA configuration is to be used upon originating an emergency call, the controller 120 may perform the processing of step S1044. Note that, for example, in a case where the controller 120 cannot recognize a change to a specific RA configuration, the controller 120 may perform the processing of step S1043 even in a case where the RA configuration determination information indicates that a specific RA configuration is to be (preferentially) used.

In a case where the RA configuration determination information indicates that either one of the RA configurations may be used, the controller 120 may perform the processing of step S1042 or may select one of steps S1043 and S1044 (for example, by implementation).

### Step S1042:

The controller 120 may determine whether the PRACH period based on the usual RA configuration (hereinafter, usual PRACH period) is shorter than the PRACH period based on the specific RA configuration (hereinafter, specific PRACH period). The controller 120 may determine, for example, whether the usual PRACH period based on the RACH configuration common information including the first RA parameter is shorter than the specific PRACH period based on the RACH configuration common information including the second RA parameter.

In a case where the usual PRACH period is shorter than the specific PRACH period, the controller 120 may perform the processing of step S1043. Alternatively, in a case where the usual PRACH period is longer than the specific PRACH period, the controller 120 may perform the processing of step S1044.

### Step S1043:

The controller 120 performs PRACH transmission using the usual RA configuration.

### Step S1044:

The controller 120 performs PRACH transmission using the specific RA configuration. Note that, in a case where the controller 120 cannot recognize a change to the specific RA configuration, the controller 120 may perform PRACH transmission using the usual RA configuration. The case where the controller 120 cannot recognize a change to the specific RA configuration may be, for example, at least one of a case where the specific DCI has failed to be received, a case where no specific RA configuration has been received, and a case where the UE 100 does not support dynamic adaptation.

The controller 120 then performs PRACH transmission to access the NES cell. The controller 120 originates an emergency call after accessing the NES cell. The controller 120 may terminate the access to the NES cell in a case where origination of the emergency call is completed.

As described above, the UE 100 having an emergency call capability can access an NES cell in a case where the UE 100 attempts to access the NES cell to originate an emergency call and the NES cell supports the emergency call even in a case where the NES cell inhibits an access thereto. This enables a necessary service of originating an emergency call to be provided to the UE 100 having no NES capability.

In addition, in a case where an emergency call is to be originated, the UE 100 can perform PRACH transmission using the usual RA configuration regardless of, for example, the configuration information related to dynamic adaptation. This enables the UE 100 to reliably perform PRACH transmission upon originating an emergency call. For example, failure to receive the specific DCI by the UE 100 may result in failure to recognize the selection of the specific RA configuration (or the change to the specific RA configuration), and may thus result in failure in PRACH transmission. Thus, use of the usual RA configuration by the UE 100 enables failure of PRACH transmission based on the specific DCI to be prevented and a robust emergency call to be realized.

In addition, the UE 100 may compare the usual PRACH period with the specific PRACH period and perform PRACH transmission with a shorter period of the PRACH periods. This enables the UE 100 to perform PRACH transmission with a shorter PRACH period. As a result, the UE 100 can originate an emergency call earlier.

Note that the controller 230 of the base station 200 may include, in, e.g., the SIB message, a second RA configuration for configuring the UE 100 with a specific PRACH period shorter than the usual PRACH period to prioritize latency reduction of the emergency call. The controller 120 of the UE 100 may use the second RA configuration in a case where, for example, an emergency call is to be originated. Alternatively, the controller 230 of the base station 200 may include, in, e.g., the SIB message, a second RA configuration for configuring the UE 100 with a specific PRACH period longer than the usual PRACH period to save the energy of the network 10.

### (Other Embodiments)

The foregoing embodiments have been described with respect to a 4-step random access procedure as an example, but the random access procedure is not limited thereto. The above operation may be performed using a 2-step random access procedure. In this case, for example, Message 1 may be replaced with Message A. Message 2 may be replaced with Message B. In addition, the word "PRACH" may be replaced with a word "RACH" in the above-described embodiments.

Moreover, the above-described embodiments may be combined with each other. For example, the operation of the second embodiment may be performed to perform PRACH transmission for originating an emergency call in the first embodiment described above.

Furthermore, the foregoing second embodiment has been described with respect to a case, as an example, where the controller 120 of the UE 100 considers (determines) that the access to the NES cell and/or cell selection/cell reselection are/is permitted, the controller 120 performs the processing of step S1020, but the process is not limited thereto. In a case where the controller 120 considers (determines) that the access to the NES cell and/or cell selection/cell reselection are/is permitted, the controller 120 may perform the processing of step S1040.
In the above-described embodiment, the mobile communication system based on the NR is described as the example of the mobile communication system 1. However, the mobile communication system 1 is not limited to the example. The mobile communication system 1 may be a system conforming to a TS of LTE (Long Term Evolution) or another generation system (for example, sixth generation) of the 3GPP standard. The base station 200 may be an eNB that provides E-UTRA user plane and control plane protocol terminations toward the UE 100 in the LTE. The mobile communication system 1 may be a system conforming to a TS defined in a standard other than the 3GPP standard. The base station 200 may be an integrated access and backhaul (IAB) donor or an IAB node.

In the above-described embodiment, the mobile communication system based on the NR is described as the example of the mobile communication system 1. However, the mobile communication system 1 is not limited to the example. The mobile communication system 1 may be a system conforming to a TS of LTE or another generation system (for example, sixth generation) of the 3GPP standard. The base station 200 may be an eNB that provides E-UTRA user plane and control plane protocol terminations toward the UE 100 in the LTE. The mobile communication system 1 may be a system conforming to a TS defined in a standard other than the 3GPP standard.

The steps in the operation of the above-described embodiment are not necessarily executed in the chronological order according to the order described in the flowchart or the sequence diagram. For example, the steps in the operation may be performed in an order different from the order described in the flowchart or the sequence diagram or may be performed in parallel. Also, a part of the steps in the operation may be deleted, or additional steps may be added to the processing. Further, each operation flow described above is not limited to a case of being necessarily implemented separately and independently, and two or more operation flows can be implemented in combination. For example, a part of steps of one operation flow may be added to another operation flow, or a part of steps of one operation flow may be replaced with a part of steps of another operation flow.

A program for causing a computer to execute each of the processes executed by the UE 100 or the base station 200 may be provided. The program may be recorded in a computer-readable medium. The program can be installed in the computer using the computer-readable medium. Here, the computer-readable medium in which the program is recorded may be a non-transitory recording medium. The non-transitory recording medium is not particularly limited and may be, for example, a recording medium such as a compact disk read only memory (CD-ROM) or a digital versatile disc read only memory (DVD-ROM). Also, circuits that execute the processes executed by the UE 100 or the base station 200 may be integrated, and at least a part of the UE 100 or the base station 200 may be configured as a semiconductor integrated circuit (a chipset or a system on chip (SoC)).

In the above-described embodiment, the term "transmit" may mean performing processing of at least one layer in the protocol stack used for transmission or may mean physically transmitting a signal in a wireless or wired manner. Alternatively, the term "transmit" may mean a combination of executing the processing of at least one layer and physically transmitting the signal in a wireless or wired manner as described above. Similarly, the term "receive" may mean executing processing of at least one layer in a protocol stack used for reception or may mean physically receiving a signal in a wireless or wired manner. Alternatively, the term "receive" may mean a combination of executing the processing of at least one layer and physically receiving the signal in a wireless or wired manner as described above. Similarly, the term "obtain/acquire" may mean obtaining/acquiring information from stored information, may mean obtaining/acquiring information from information received from another node, or may mean obtaining/acquiring information by generating information. Similarly, the terms "based on" and "depending on/in response to" do not mean "based only on" or "depending only on/in response only to" unless explicitly stated otherwise. The term "based on" means both "based only on" and "at least partially based on". Similarly, the term "depending on/in response to" means both "depending only on/in response only to" and "at least partially depending on/at least partially in response to". Similarly, the terms "include" and "comprise" do not mean including only enumerated items but mean both of including only enumerated items and including more items in addition to the enumerated items. Similarly, in the present disclosure, the term "or" does not mean exclusive OR, and means OR. Further, any reference to elements using designations such as "first", "second", and the like used in the present disclosure does not generally limit the amount or the order of the elements. Such designations may be used in the present disclosure as a convenient method to distinguish between two or more elements. References to first and second elements do not mean that only two elements can be employed therein or that the first element should precede the second element in any form. In the present disclosure, for example, in a case where articles such as "a", "an", and "the" in English are added by translation, such articles cover the plural meaning unless the context clearly indicates otherwise.

Although the present disclosure has been described according to examples, it is understood that the present disclosure is not limited to the examples or structures. The present disclosure also includes various modified examples or modifications made within an equivalent range. Additionally, various combinations or modes, or other combinations or modes including only one element, more elements, or less elements also fall within the scope and spirit of the present disclosure.

### (Supplementary Notes)

Features related to the above-described embodiment are additionally described.

### (Supplementary Note 1)

A communication apparatus (100) comprising:
a receiver (112) configured to receive a retransmission parameter from a base station (200), the retransmission parameter being a random access parameter used, in a random access (RA) procedure, for retransmission control on an RA preamble in a physical random access channel (PRACH) occasion; and
a controller (120) configured to control retransmission of the RA preamble on a basis of the retransmission parameter, wherein
the retransmission parameter includes a specific retransmission parameter exclusively used in a case where a period of the PRACH occasion is to be changed by signaling of a lower layer lower than a radio resource control (RRC) layer.

### (Supplementary Note 2)

The communication apparatus according to Supplementary Note 1, wherein
the specific retransmission parameter is included in a system information block type 1 message.

### (Supplementary Note 3)

The communication apparatus according to Supplementary Note 1 or 2, wherein
the specific retransmission parameter includes at least one of a value indicating a receive window length for an RA response, a value of a contention resolution timer for triggering retransmission of the RA preamble, and a value indicating a maximum number of times of transmission of the RA preamble, the RA response being a response to the RA preamble.

### (Supplementary Note 4)

The communication apparatus according to any one of Supplementary Notes 1 to 3, wherein
the controller uses the specific retransmission parameter in a case where the signaling of a lower layer for changing the period of the PRACH occasion has been received.

### (Supplementary Note 5)

The communication apparatus according to any one of Supplementary Notes 1 to 4, wherein
in a case where a random access parameter to be changed by the signaling of a lower layer has not been received, the controller ignores the signaling of a lower layer for changing the period of the PRACH occasion even in a case where the signaling of a lower layer has been received.

### (Supplementary Note 6)

The communication apparatus according to any one of Supplementary Notes 1 to 5, wherein
the receiver receives, from the base station, a list formed of a plurality of specific random access (RA) configurations that are used to configure the period of the PRACH occasion and are to be changed by the signaling of a lower layer, and
the controller selects a specific RA configuration for use in the RA procedure on a basis of the signaling of a lower layer from the base station.

### (Supplementary Note 7)

The communication apparatus according to Supplementary Note 6, wherein
the signaling of a lower layer includes information indicating a position of entry of one of the specific RA configurations in the list, and
the controller selects the one of the specific RA configurations in the position indicated by the information.

### (Supplementary Note 8)

The communication apparatus according to Supplementary Note 6, wherein
each of the plurality of specific RA configurations is associated with an index,
the signaling of a lower layer includes information indicating the index, and
the controller selects one of the specific RA configurations associated with the index.

### (Supplementary Note 9)

The communication apparatus according to any one of Supplementary Notes 6 to 8, wherein
each of the plurality of specific RA configurations is associated with the specific retransmission parameter; and
the controller uses, in the RA procedure, the specific retransmission parameter with which the specific RA configuration selected is associated.

### (Supplementary Note 10)

The communication apparatus according to any one of Supplementary Notes 1 to 9, wherein
even in a case where the period of the PRACH occasion is to be changed by the signaling of a lower layer, the controller uses a parameter for use in a case where the period of the PRACH occasion is to be changed by signaling of the RRC layer, as an RA parameter for controlling transmission power of the RA preamble.

### (Supplementary Note 11)

A base station comprising:
a transmitter configured to transmit a retransmission parameter to a communication apparatus, the retransmission parameter being a random access parameter used, in a random access (RA) procedure, for retransmission control on an RA preamble in a physical random access channel (PRACH) occasion, wherein
the retransmission parameter includes a specific retransmission parameter exclusively used in a case where a period of the PRACH occasion is to be changed by signaling of a lower layer lower than a radio resource control (RRC) layer.

### (Supplementary Note 12)

A communication method performed in a communication apparatus, the communication method comprising the steps of:
receiving a retransmission parameter from a base station, the retransmission parameter being a random access parameter used, in a random access (RA) procedure, for retransmission control on an RA preamble in a physical random access channel (PRACH) occasion; and
controlling retransmission of the RA preamble on a basis of the retransmission parameter, wherein
the retransmission parameter includes a specific retransmission parameter exclusively used in a case where a period of the PRACH occasion is to be changed by signaling of a lower layer lower than a radio resource control (RRC) layer.

## Claims

1. A communication apparatus (100) comprising:
a receiver (112) configured to receive a retransmission parameter from a base station (200), the retransmission parameter being a random access parameter used, in a random access (RA) procedure, for retransmission control on an RA preamble in a physical random access channel (PRACH) occasion; and
a controller (120) configured to control retransmission of the RA preamble on a basis of the retransmission parameter, wherein
the retransmission parameter includes a specific retransmission parameter exclusively used in a case where a period of the PRACH occasion is to be changed by signaling of a lower layer lower than a radio resource control (RRC) layer.

2. The communication apparatus according to claim 1, wherein
the specific retransmission parameter is included in a system information block type 1 message.

3. The communication apparatus according to claim 1 or 2, wherein
the specific retransmission parameter includes at least one of a value indicating a receive window length for an RA response, a value of a contention resolution timer for triggering retransmission of the RA preamble, and a value indicating a maximum number of times of transmission of the RA preamble, the RA response being a response to the RA preamble.

4. The communication apparatus according to claim 1 or 2, wherein
the controller uses the specific retransmission parameter in a case where the signaling of a lower layer for changing the period of the PRACH occasion has been received.

5. The communication apparatus according to claim 1 or 2, wherein
in a case where a random access parameter to be changed by the signaling of a lower layer has not been received, the controller ignores the signaling of a lower layer for changing the period of the PRACH occasion even in a case where the signaling of a lower layer has been received.

6. The communication apparatus according to claim 1 or 2, wherein
the receiver receives, from the base station, a list formed of a plurality of specific random access (RA) configurations that are used to configure the period of the PRACH occasion and are to be changed by the signaling of a lower layer, and
the controller selects a specific RA configuration for use in the RA procedure on a basis of the signaling of a lower layer from the base station.

7. The communication apparatus according to claim 6, wherein
the signaling of a lower layer includes information indicating a position of entry of one of the specific RA configurations in the list, and
the controller selects the one of the specific RA configurations in the position indicated by the information.

8. The communication apparatus according to claim 6, wherein
each of the plurality of specific RA configurations is associated with an index,
the signaling of a lower layer includes information indicating the index, and
the controller selects one of the specific RA configurations associated with the index.

9. The communication apparatus according to claim 6, wherein
each of the plurality of specific RA configurations is associated with the specific retransmission parameter; and
the controller uses, in the RA procedure, the specific retransmission parameter with which the specific RA configuration selected is associated.

10. The communication apparatus according to claim 1 or 2, wherein
even in a case where the period of the PRACH occasion is to be changed by the signaling of a lower layer, the controller uses a parameter for use in a case where the period of the PRACH occasion is to be changed by signaling of the RRC layer, as an RA parameter for controlling transmission power of the RA preamble.

11. A base station (200) comprising:
a transmitter (211) configured to transmit a retransmission parameter to a communication apparatus, the retransmission parameter being a random access parameter used, in a random access (RA) procedure, for retransmission control on an RA preamble in a physical random access channel (PRACH) occasion, wherein
the retransmission parameter includes a specific retransmission parameter exclusively used in a case where a period of the PRACH occasion is to be changed by signaling of a lower layer lower than a radio resource control (RRC) layer.

12. A communication method performed in a communication apparatus (100), the communication method comprising the steps of:
receiving a retransmission parameter from a base station (200), the retransmission parameter being a random access parameter used, in a random access (RA) procedure, for retransmission control on an RA preamble in a physical random access channel (PRACH) occasion; and
controlling retransmission of the RA preamble on a basis of the retransmission parameter, wherein
the retransmission parameter includes a specific retransmission parameter exclusively used in a case where a period of the PRACH occasion is to be changed by signaling of a lower layer lower than a radio resource control (RRC) layer.
